(19) Europäisches Patentamt
European Patent Office
Office européen des brevets

(11) **EP 3 128 022 A1**

(12) **EUROPEAN PATENT APPLICATION**
published in accordance with Art. 153(4) EPC

(43) Date of publication:
**08.02.2017 Bulletin 2017/06**

(21) Application number: **15774296.6**

(22) Date of filing: **20.03.2015**

(51) Int Cl.:
*C22C 21/02* (2006.01)      *B32B 15/20* (2006.01)
*C22C 21/06* (2006.01)      *C22F 1/05* (2006.01)
*C22F 1/00* (2006.01)

(86) International application number:
**PCT/JP2015/058629**

(87) International publication number:
**WO 2015/151886 (08.10.2015 Gazette 2015/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **31.03.2014 JP 2014074048**

(71) Applicant: **Kabushiki Kaisha Kobe Seiko Sho
(Kobe Steel, Ltd.)
Kobe-shi, Hyogo 651-8585 (JP)**

(72) Inventors:
• **TATSUMI, Akihiko
hyogo 651-2271 (JP)**
• **TAKADA, Satoru
hyogo 651-2271 (JP)**
• **OZAWA, Takahiro
hyogo 651-2271 (JP)**

(74) Representative: **Müller-Boré & Partner
Patentanwälte PartG mbB
Friedenheimer Brücke 21
80639 München (DE)**

(54) **ALUMINUM ALLOY MATERIAL AND JOINED BODY HAVING EXCEPTIONAL ADHESIVE ENDURANCE, AND AUTOMOTIVE COMPONENT**

(57)    The Sn content of an oxide coating of a 6000-series aluminum alloy sheet having a predetermined composition containing Sn is set to a predetermined range, the Mn content is restricted to a predetermined amount or less, thereby the adhesive endurance evaluated by a test method shown in Fig. 1 is improved, and application of the 6000-series aluminum alloy sheet is widened to an outer panel and the like that is inevitably joined using an adhesive.

# F I G . 1

**Description**

[Technical Field]

The present invention relates to Al-Mg-Si-based aluminum alloy material and a joined body having exceptional adhesive endurance, and an automotive component. Aluminum alloy material mentioned in the present invention means a rolled sheet such as a hot rolled sheet and a cold rolled sheet, or hot-extruded extruded material, hot-forged forged material, and the like. Further, in the descriptions below, aluminum is also referred to as Al.

[Background Art]

In recent years, out of the consideration for the earth environment and the like, the social requirement of weight reduction of a vehicle such as an automobile is increasing more and more. In order to cope with such a requirement, as the material of a large panel structural body (outer panel, inner panel), reinforcement material, and the like of an automobile, instead of iron and steel material such as a steel sheet, application of aluminum alloy material exceptional in formability and paint-bake hardenability and light in weight is increasing.
For the automotive components such as the panel structural body and reinforcement body, aluminum alloy material of Al-Mg-Si-based AA or JIS 6000-series (hereinafter simply referred to also as 6000-series) is used as a high strength aluminum alloy for the purpose of thinning.
However, this 6000-series aluminum alloy material has a natural aging property at room temperature although it has an advantage of having exceptional BH response, and had a problem that the formability to a panel and a reinforcement member, particularly the bending workability deteriorated because of age hardening in being held at the room temperature after solution quenching processing and increase of the strength. Further, when natural aging at room temperature is great, the BH response deteriorates, and such a problem also occurs that the proof stress does not improve to the strength required as a panel according to heating at the time of artificial aging (hardening) processing at comparatively low temperature such as coating/baking processing of a panel after forming.
As one of the metallurgical countermeasures for it, a method has been proposed in which Sn is positively added to a 6000-series aluminum alloy sheet, and suppression of natural aging at room temperature and improvement of the BH response are achieved. For example, in Patent Literature 1, a method is proposed in which Sn is added by a proper amount, auxiliary aging is executed after solution treatment, and thereby both of suppression of natural aging at room temperature and BH response are achieved. Also, in Patent Literature 2, a method is proposed in which Sn and Cu which improves the formability are added, and the formability, paint-bale property, and corrosion resistance are improved.

[Citation List]

[Patent Literature]

Patent Literature 1: Japanese Unexamined Patent Application Publication No. H09-249950
Patent Literature 2: Japanese Unexamined Patent Application Publication No. H10-226894

[Summary of Invention]

[Technical Problems]

However, in the Al-Mg-Si-based aluminum alloy material of the related art described above to which Sn is positively added, there is a problem that the adhesion endurance is to be further improved.
In other words, as a method for joining the Al-Mg-Si-based aluminum alloy material added with Sn with other members as an automotive component, in addition to mechanical joining, joining by welding and an adhesive has been selectively used or used in combination. On the other hand, in recent years, because of improvement of the joining strength of the adhesive and convenience of working, the adhesive has been frequently used for joining of many automotive components. Because adhesion by the adhesive executes joining by the entire surface, the joining strength is further increased which is advantageous in terms of collision safety and the like of an automobile compared to that mechanical joining and welding execute joining by points and lines. Also, with respect to automotive material externally used such as an outer panel in which beauty and outer appearance are required, mechanical joining, welding and the like cannot be applied, and joining by an adhesive is the only solution.
However, the automotive component made of an aluminum alloy and joined by an adhesive had such a problem that the moisture, oxygen, chloride ion, and the like intruded to its joining part during use, thereby the interface of the adhesive layer and the aluminum alloy sheet gradually deteriorated, interface exfoliation occurred, and the adhesion strength lowered. In particular, by intrusion of the flown salt portion derived from the sea water and the salt portion contained in the antifreezing admixture and the like of the road, deterioration of the joining part (adhered part) is promoted, and the adhesive endurance lowers.

As a method for improving such adhesive endurance, although a method of removing a weak oxide coating that becomes a cause of the interface exfoliation of the surface of an aluminum alloy sheet beforehand by pickling before coating the adhesive and so on are common, the effect is small with respect to the Al-Mg-Si-based aluminum alloy material added with Sn. Further, although a method of anodic oxidation of the surface of an aluminum alloy sheet and imparting such a surface form of providing an oxide coating with the anchor effect and a method of subjecting the surface of an aluminum alloy sheet to hot water treatment and controlling the Mg amount and the OH amount of an oxide coating that becomes a cause of the interface exfoliation are common, also in this method, the effect is small with respect to the Al-Mg-Si-based aluminum alloy material added with Sn.

Therefore, in order to apply the Al-Mg-Si-based aluminum alloy material added with Sn to an automotive component by joining using an adhesive, to improve its adhesive endurance was a big problem.

The present invention has been developed in order to solve such a problem, and its object is to provide Al-Mg-Si-based aluminum alloy material added with Sn in which the adhesion endurance as an automotive component is improved, a joined body using this aluminum alloy material, and an automotive component including the aluminum alloy material or the joined body.

[Solution to Problem]

In order to solve this problem, the gist of the aluminum alloy material having exceptional adhesion endurance of the present invention is Al-Mg-Si-based aluminum alloy material including Sn in which, when an oxide coating formed on the surface of the aluminum alloy material is subjected to glow discharge emission spectroscopic analysis, as the maximum value of each content of Sn and Mg for a region from the surface of the oxide coating to a depth where the oxygen amount becomes 15 at%, the Sn content is within a range of 0.01-10 at%, and the Mg content is 0 at% or more and less than 10 at%.

[Advantageous Effects of Invention]

The present inventors found that the adhesive endurance improved when Sn was concentrated in the oxide coating formed on the surface of the Al-Mg-Si-based aluminum alloy sheet containing Sn (hereinafter referred to also as the surface oxide coating) by diffusion of Sn from the base plate or by adding Sn from the outside. On the other hand, Mg that is the main element of the Al-Mg-Si-based aluminum alloy sheet diffuses to the surface oxide coating from the base plate, is concentrated, and deteriorates the adhesive endurance.

Therefore, in the present invention, Sn is contained by a constant amount in the surface oxide coating of the Al-Mg-Si-based aluminum alloy sheet containing Sn, the content of Mg is restricted, and thereby the adhesive endurance as an automotive component is improved.

As a result, according to the present invention, application of the Al-Mg-Si-based aluminum alloy material added with Sn to such an automotive component and the like of joining with other components by an adhesive can be enabled or promoted.

[Brief Description of Drawing]

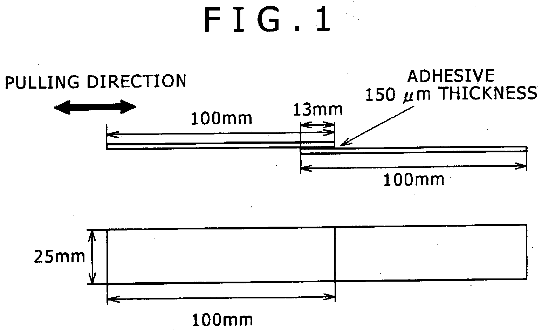

[Fig. 1] Fig. 1 is an explanatory drawing that shows a form of a test for the adhesive endurance in an example.

[Description of Embodiments]

Below, embodiments of the present invention will be described specifically according to the requirement.

(Chemical composition)

First, the Al-Mg-Si-based aluminum alloy material of the present invention contains Sn, and the composition range of the 6000-series aluminum alloy in line with JIS or AA Standards can be applied as far as it is the composition satisfying the required property as an automotive component. However, when the aluminum alloy material is a cold rolled sheet as a raw material for an automotive component particularly for a panel, it is necessary to satisfy this required property of the automotive panel. In concrete terms, as a property after the T4 refining such as the solution and quenching treatment, it is necessary that the 0.2% proof stress thereof is lowered to 110 MPa or less and the formability can be secured at the time of formation to an automotive panel, and that such BH response (bake hard property) is provided that the 0.2% proof stress after paint-bake hardening as an automotive component thereafter is high-strengthened to 200 MPa or more. Therefore, also as an aluminum alloy, it is preferable to enable it from the facet of the composition. Also, because various properties such as the rigidity, weldability and corrosion resistance are also required according to the use of the component in addition to the exceptional formability and BH response as an automotive component, it is preferable to satisfy these requirements also from the facet of the composition. Hereinafter, the Al-Mg-Si-based is referred to also as the 6000-series.

As the preferable composition of the 6000-series aluminum alloy sheet which satisfies the various properties required as the automotive panel component, in mass%, Sn is contained by 0.005-0.3%, and, as the fundamental elements, Mg is contained by 0.2-2.0% and Si is contained by 0.3-2.0%. Also, the remainder can be Al and inevitable impurities. Other elements other than the Mg, Si and Sn are impurities or the elements that may be contained, and are to be contained by the content (allowable amount) of each element level in line with AA or JIS Standards and the like.

The content range, significance, or allowable amount of each element in the preferable composition of the 6000-series aluminum alloy will also be described below.

Si: 0.3-2.0%

Si is an essential element for forming aging precipitates that contribute to improvement of the strength along with Mg at the time of artificial aging processing such as the paint-bake treatment, exerting the age hardening property, and securing the strength (proof stress) required as an automotive panel. When the Si adding amount is insufficient, the precipitation amount after the artificial aging becomes insufficient, and the strength increase amount at the time of paint-baking becomes too low. In contrast, when the Si content is excessive, coarse crystallized grains are formed along with Fe and the like of impurities, and the formability such as the bending workability is extremely deteriorated. Also, when the Si content is excessive, not only the strength immediately after manufacturing of the sheet but also the amount of natural aging at room temperature after manufacturing becomes high, the strength before formation becomes too high, and the formability of a panel structural body of an automobile to such an automotive panel and the like in which the face distortion particularly becomes a problem deteriorates. Therefore, the Si content is preferably made in the range of 0.3-2.0%. The lower limit value of the Si content is more preferably 0.5%, and still more preferably 0.7%. Also, the upper limit value of the Si content is more preferably 1.8%, and still more preferably 1.5%.

In order to exert the exceptional age hardening property in the paint-bake treatment at a lower temperature and within a shorter time after formation to a panel, such a 6000-series aluminum alloy composition is preferable that Si/Mg is made 1.0 or more in terms of the mass ratio, and Si is contained more excessively with respect to Mg compared to generally called excessive Si type.

Mg: 0.2-2.0%

Mg is also an essential element for forming the cluster defined in the present invention along with Si, and is an essential element for forming aging precipitates that contribute to improvement of the strength along with Si at the time of the artificial aging treatment such as the paint-bake treatment, exerting the age hardening property, and securing the proof stress required as a panel. When the Mg content is insufficient, the precipitation amount after the artificial aging becomes insufficient, and the strength after the paint-baking becomes too low. In contrast, when the Mg content becomes excessive, coarse crystallized grains are formed along with Fe and the like of impurities, and the formability such as the bending workability is extremely deteriorated. Also, when the Mg content is excessive, not only the strength immediately after manufacturing of the sheet but also the amount of the natural aging at room temperature after manufacturing becomes high, the strength before formation becomes too high, and the formability of a panel structural body of an automobile to such an automotive panel and the like in which the face distortion particularly becomes a problem deteriorates. Therefore, the Mg content is preferably made in the range of 0.2-2.0%. The lower limit value of the Mg content is more preferably 0.25%, and still more preferably 0.30%. Also, the upper limit value of the Mg content is more preferably 1.5%, and still more preferably 1.2%.

Sn: 0.005-0.3%

When Sn is contained preferably by 0.005-0.3% in the aluminum alloy material, the natural aging at room temperature of the sheet after manufacturing is suppressed, the 0.2% proof stress at the time of formation to an automotive component can be lowered to 110 MPa or less, and the formability of a panel structural body of an automobile to such an automotive panel in which the face distortion particularly becomes a problem can be improved. Also, the 0.2% proof stress after the paint-bake hardening can be made 200 MPa or more from the facet of the composition.

At the room temperature, Sn suppresses diffusion of Mg and Si at the room temperature by capturing (catching, trapping) the atomic vacancies, and suppresses strength increase at the room temperature. Also, because the vacancies having been captured are discharged at the time of the artificial aging treatment such as the paint-bake treatment of a panel after formation, diffusion of Mg and Si is promoted adversely, and the BH response can be improved. When the Sn content is less than 0.005%, the vacancies cannot be trapped sufficiently, and it is probable that its effect cannot be exerted. In contrast, when the Sn content is more than 0.3%, Sn is segregated at the grain boundary, and is liable to become a cause of the intercrystalline crack. The lower limit value of the Sn content is more preferably 0.008%, and still more preferably 0.010%. The upper limit value of the Sn content is more preferably 0.28%, and still more preferably 0.25%.

With respect to other elements, when not only high purity Al metal but also the 6000-series alloy that contains a large amount of other elements other than Mg and Si as the additive elements (alloy elements), other aluminum alloy scrap material, low purity Al metal, and the like are used by a large amount as the melting raw material of the alloy from the viewpoint of recycling the resources, such elements as described below are inevitably mixed by a substantial amount. When these elements are tried to be reduced positively, the cost of smelting itself increases, and therefore it becomes necessary to tolerate them to be contained to some extent. Therefore, in the present invention, such elements as described below are allowed to be contained respectively within the range of the upper limit amount or less in accordance with AA or JIS Standards and the like defined below. Specifically, the aluminum alloy sheet may further contain one element or two elements or more of Fe: 1.0% or less (not inclusive of 0%), Mn: 1.0% or less (not inclusive of 0%), Cr: 0.3% or less (not inclusive of 0%), Zr: 0.3% or less (not inclusive of 0%), V: 0.3% or less (not inclusive of 0%), Ti: 0.1% or less (not inclusive of 0%), Cu: 1.0% or less (not inclusive of 0%), Ag: 0.2% or less (not inclusive of 0%), and Zn: 1.0% or less (not inclusive of 0%) within these ranges in addition to the basic composition described above.

(Aluminum alloy material)

The aluminum alloy material referred to in the present invention means a cold rolled sheet having thin thickness of 2 mm or less for an outer panel, or an inner panel and the like as an automotive component. Also, it means a hot rolled sheet and a hot extruded shape having thick thickness of exceeding 2 mm for the structural material such as a pillar and the reinforcement material of a panel, bumper, door and the like, and means hot forged material and the like for the chassis components such as an arm group.

Such aluminum alloy material is manufactured commonly by an ordinary method or a known method with respect to the manufacturing step itself. In other words, an aluminum alloy ingot having the 6000-series composition is casted, is thereafter subjected to homogenizing heat treatment, is hot-worked (rolled, extruded, forged), and is thereafter subjected to cold working such as cold rolling according to the necessity to obtain a shape with a predetermined thickness. Further, the solution and quenching treatment as well as the refining treatment (T4) added with the preliminary aging treatment, reheating treatment and the like according to the necessity are executed to manufacture the aluminum alloy material. The oxide coating is formed by heating at the time of these refining treatments.

The aluminum alloy material, particularly the cold rolled sheet for a panel after the refining treatment is properly subjected to the alkali degreasing treatment and the pickling treatment as well as the surface treatment for preventing corrosion, and so on. Representatively, the surface treatment of the sheet is executed by making the surface of the sheet formed with the oxide coating be showered and sprayed by each process fluid, pass through or be immersed in each processing aqueous solution, be water washed, and be dried. By this surface treatment, the content of Sn and Mg of the oxide coating formed in the heating treatment is controlled to the predetermined range. With respect to the aqueous solution for this surface treatment, in concrete terms, acid or acid mixture of nitric acid, sulfuric acid, and fluoric acid, and the like, alkali solution containing sodium hydroxide, potassium hydroxide, silicate, or carbonate, and the like, acid (inclusive of acid mixture obtained by mixing acid of two kinds or more) or alkali solution (inclusive of an alkali solution obtained by mixing alkali of two kinds or more) containing Si, Zr, Ti, Hf, V, Nb, Ta, Cr, Mo, and W in the form of ion and salt are used solely or in combination for treatment. In the surface treatment, the treatment temperature is 10-90°C, and the treatment time is 1-200 s or 2-200 s.

(Surface oxide coating)

In the present invention, each content of Sn and Mg in the oxide coating (aluminum oxide coating) formed on the surface of the 6000-series aluminum alloy material as described above is defined to improve the adhesive endurance. Also, the oxide coating itself of the present invention is an ordinary oxide coating that is produced by the heat treatment at the time of refining executed inevitably in the manufacturing step of the aluminum alloy material described above and is formed naturally after the pickling and surface treatment and so on to follow. In other words, it is not necessary to execute a special step of electrolysis and the like such as the anode oxidation and to produce the oxide coating forcibly or specially.

In the present invention, when an oxide coating formed on the surface of the 6000-series aluminum alloy material is subjected to glow discharge emission spectroscopic analysis, as the maximum value of each content of Sn and Mg for a region from the surface of the oxide coating to a depth where the oxygen amount becomes 15 at%, the Sn content is made within a range of 0.01-10 at%, and the Mg content is made less than 10 at% (inclusive of 0 at%). The oxide coating defined in the present invention does not necessarily exist over the entire surface of the 6000-series aluminum alloy material surface, and only has to exist at least over the surface where the adhesive is applied (sprayed) or partially. For example, in the case of a sheet, the oxide coating satisfying the stipulation of the present invention only has to exist at least on one face or a part where the adhesive is applied (sprayed), and it is not necessary that the both surfaces of the sheet are the oxide coatings satisfying the stipulation of the present invention.

Also, the reason the measurement limit of the depth of the oxide coating at the time of the glow discharge emission spectroscopic analysis is made 15 at% in terms of the oxygen amount of the oxide coating is to clearly define the boundary of the oxide coating as the object of the measurement and the base plate aluminum alloy and the depth range of the oxide coating as the object of the measurement, and to increase the reproducibility of the measurement. It is a matter of course that, because the oxygen amount of the oxide coating reduces as it goes close to the base plate, in the present invention, with this oxygen amount being made a reference, the range where the oxygen amount is less than 15 at% is excluded from the object of the measurement of the glow discharge emission spectroscopic analysis.

Sn content

By containing Sn in the surface oxide coating so that the maximum value of the Sn content for a region from the surface of the oxide coating (surface position) to a depth where the oxygen amount becomes 15 at% (depth position) becomes within the range of 0.01-10 at%, the stability with respect to the deterioration factor such as the water, oxygen, chloride ion of the coating increases. In other words, by suppressing hydration at the interface of the adhesive sprayed and the surface oxide coating and by suppressing dissolution of the base material, the adhesive endurance improves.

With respect to the method for containing Sn in the surface oxide coating by the amount described above, for example, by combination of the treatments such as to diffuse Sn in the base plate alloy to the surface oxide coating by the heat treatment and to remove excessive Sn from the surface oxide coating by the pickling and the surface treatment described above, the diffusion amount to the surface oxide coating and the content are controlled conveniently, and desired Sn content can be achieved. Further, although Sn can be supplied from the outside to the oxide coating by the surface treatment and the like, it is more convenient and reasonable to utilize Sn of the base plate which has been originally contained.

When the maximum value of the Sn content for a region from the surface of the oxide coating to a depth where the oxygen amount becomes 15 at% in the surface oxide coating is less than 0.01 at%, there is no improving effect of the adhesive endurance, whereas when the maximum value of the Sn content exceeds 10 at%, selective dissolution of Sn is prioritized to the suppressing effect of the interface hydration, and the improving effect of the adhesive endurance saturates and starts to lower. The maximum value of the Sn content is made preferably within the range of 0.02-8 at%, and still more preferably within the range of 0.04-6 at%.

Mg content

The maximum value of the Mg content for a region from the surface of the oxide coating to a depth where the oxygen amount becomes 15 at% in the surface oxide coating is made less than 10 at%. When the 6000-series aluminum alloy material containing Mg is subjected to heat treatment in the air, Mg is concentrated on the surface and becomes a weak boundary layer of the adhesion interface against the adhesive sprayed, and initial adhesive endurance lowers. In addition, under the deterioration environment in which the moisture, oxygen, chloride ion, and the like intrude, by hydration at the interface against the adhesive and dissolution of the base material, the adhesive endurance lowers.

Therefore, it is necessary to remove Mg in the surface oxide coating by the step such as the pickling and surface treatment described above, and to control and suppress the Mg content. For example, the Mg amount can be controlled by controlling the treatment time, temperature, concentration of chemicals, and pH using acid aqueous solution of nitric acid, sulfuric acid, and the like.

When the maximum value of the Mg content for a region from the surface of the oxide coating to a depth where the oxygen amount becomes 15 at% in the surface oxide coating exceeds 10 at%, the adhesive endurance lowers because of the mechanism described above, therefore the maximum value of the Mg content is preferable to be as small as possible, and is possible to include the case of 0 at% in which Mg does not exist although it is hardly attainable. Although the maximum value of the Mg content is made preferably 8 at%, and still more preferably 6 at%, from the viewpoint of the economy of the treatment for suppressing Mg, it may be made 0.1 at% or more.

Method for determining maximum value of Sn and Mg content

With respect to determination of the maximum value of Sn and Mg, over a region from the surface position of the oxide coating to a depth position where the oxygen amount becomes 15 at% in the depth direction, the glow discharge emission spectroscopic analysis (GD-OES analysis, Glow Discharge Optical Emission Spectroscopy) capable of continuous determination of these elements is used. As the apparatus for it, the model JY-5000RF made by HORIBA Jobin Yvon and the like are used for example. The aluminum alloy material which becomes an object of the measurement and whose maximum value of Sn and Mg has been controlled is measured after the surface thereof has been cleaned by a cleaning solvent not containing the elements such as Sn and Mg which may become the disturbance without effecting etching. Considering also the dispersion of the oxide coating composition, measurement is executed for several optional positions of the aluminum alloy material, for example five locations with proper intervals in between, and the maximum values of the Sn and Mg content obtained are averaged and are made respective maximum values.

Other composition of oxide coating

The compositions other than magnesium (Mg) and tin (Sn) contained in the oxide coating are oxygen (O), aluminum (Al), and the like. In the oxide coating, it is preferable that the O content is 15-80 at% and the Al content is 15-80 at%. As other compositional elements, Si, Cu, S, C, N, Ca, Fe, Mn, Ti, Zn, Ni, and the like can be cited, and containment is allowed when Si is less than 20 at%, Cu is less than 5 at%, S is less than 5 at%, C is less than 20 at%, N is less than 15 at%, and other elements are less than 7 at%.

Coating thickness of oxide coating

It is preferable that the coating thickness of the oxide coating is 1-30 nm. Because excessive pickling and the like are required in order to control the coating thickness of the oxide coating to less than 1 nm, the productivity deteriorates, and the practicality is liable to deteriorate. In contrast, when the coating thickness of the oxide coating exceeds 30 nm, the coating thickness amount becomes excessive, and unevenness is liable to be generated on the surface. When the unevenness is generated on the surface of the oxide coating, the chemical conversion mottle is liable to be generated at the time of the chemical conversion treatment executed before the painting step for the automotive use for example, and the chemical conversion performance deteriorates. Further, from the viewpoint of the chemical conversion performance, the productivity, and the like, it is more preferable that the coating thickness of the oxide coating is 3 nm or more and less than 20 nm.

Joining of aluminum alloy material

The aluminum alloy material of the present invention includes an adhesive layer on the surface of the surface oxide coating of the predetermined composition, and is joined, as an automotive component and the like, with other components for example aluminum alloy material of the same kind or steel material such as a steel sheet of a different kind, plastic material, ceramic material, and the like. Also, the aluminum alloy material of them may be joined with each other through an adhesive layer so that respective the surface oxide coatings oppose with each other.

Although formation of the adhesive layer is a step for forming an adhesive layer formed of an adhesive on the surface of the surface oxide coating, the forming method is not particularly limited. For example, such a method can be cited of spraying or coating an adhesive on the surface of the surface oxide coating after the adhesive is dissolved to a solvent and is made a solution when the adhesive is solid and as it is when the adhesive is liquid. With respect to the adhesive, a resin adhesive for the general purpose or the commercial use can be used as an adhesive for an automotive component, and the adhesive is formed of a thermosetting type epoxy resin, acrylic resin, urethane resin, and the like for example. Further, although the thickness of the adhesive is not particularly limited, it is preferably 10-500 μm, and still more preferably 50-400 μm.

Although the present invention will be described more specifically below referring to examples, the present invention is not to be limited by the examples below and can be implemented appropriately adding alterations within a range adaptable to the gists described above and below, and all of them are to be included within the technical range of the present invention.

[Examples]

Next, examples of the present invention will be described. 6000-series aluminum alloy sheets with different maximum value of each content of Sn and Mg for a region from the surface of the oxide coating to a depth where the oxygen amount became 15 at% were manufactured separately, and the adhesive endurance was evaluated.

Specifically, as shown in Table 2, the 6000-series aluminum alloy sheets were manufactured individually changing the temperature and the holding time of the preliminary aging treatment at the time of T4 refining of the cold rolled sheets, the pH, the holding (immersion) temperature, the holding (immersion) time of the zirconium aqueous solution for the surface treatment thereafter, and so on. Here, the 6000-series aluminum alloy sheet that became the base plate was made a single cold rolled thin sheet with the same composition shown in Table 1 and the same manufacturing condition described below in order to eliminate the effect of the difference in the composition and the manufacturing method of the base plate.

(Manufacturing condition of sheet)

With respect to the 6000-series aluminum alloy sheets described above, aluminum alloy ingots with each composition shown in Table 1 were smelted by the DC casting method, the ingots were subjected to the soaking treatment of $540°C \times 6$ hrs, and hot rough rolling was thereafter started at the temperature. In the finish rolling to follow, hot rolling was executed to 3.3 mm thickness to obtain a hot rolled sheet. After this hot rolled sheet was subjected to rough annealing of $500°C \times 1$ min, cold rolling was executed with the working rate of 70% without the intermediate annealing in the middle of the cold rolling pass, and the cold rolled sheet (coil) with 1.0 mm thickness was obtained.

Further, each of these cold rolled sheets (coils) was subjected to refining treatment (T4) continuously while executing recoiling and coiling by a continuous heat treatment apparatus. Specifically, the solution treatment was executed with the average heating rate of 10°C/s to 500°C and holding of 10 s after reaching the target temperature of 560°C, water cooling was thereafter executed so that the average cooling rate became 100°C/s to be cooled to the room temperature. After this cooling, the preliminary aging treatment of holding of 5 hrs at 100°C was executed (slow cooling at the cooling rate of 0.6°C/hr after the holding). After executing the preliminary aging treatment, various surface treatments were executed.

With respect to each sheet (sheet segment) separately taken from the coil after the preliminary aging, each invention example of Table 2 was subjected to alkali degreasing of pH 10 or above and pickling and surface treatment by a solution containing sulfuric acid of pH 2 or below in order, and the maximum Sn content and the maximum Mg content described above in the oxide coating were controlled variously changing the liquid temperature and the immersion time of each step. With respect to the aqueous solution for the surface treatment, the acid solution described above containing ions of Zr and Ti by 1 wt% respectively was used commonly to each example.

For comparison, although the comparative example 1 of Table 2 was subjected to a series of these treatments, such treatment condition of pickling that the Sn content in the oxide coating became 0 was employed. Also, the comparative example 2 of Table 2 was not subjected to a series of these treatments at all, the comparative example 3 was subjected to the alkali degreasing only, and the comparative example 4 was not subjected to the alkali degreasing and was subjected to the pickling and the heat treatment described above.

Next, commonly to these respective examples, after the surface treatment and degreasing, water washing was executed within 5 min, drying was executed within 5 min after the water washing, and the aluminum alloy sheet was manufactured in which the surface aluminum oxide coatings with the coating thickness of less than 20 nm and with the Sn and Mg content being controlled were formed on both surfaces of the sheet to obtain a specimen. Also, with respect to only the comparative example 2 of Table 2, each sheet (sheet fragment) individually taken from the coil after the preliminary aging without execution of a series of the treatments was subjected to water washing and drying in a similar manner to obtain a specimen.

Considering the fact that the sheet thus manufactured was naturally aged at room temperature until it was joined by the adhesive, the test piece with 100 mm length×25 mm width was taken from each specimen sheet after it was left at the room temperature (natural aging at room temperature) for 30 days after the surface treatment. Further, the maximum value (at%) of each content of Sn and Mg for a region from the surface of the oxide coating to a depth where the oxygen amount became 15 at% when the oxide coating formed on the surface of this test piece was subjected to the glow discharge emission spectroscopic analysis in the procedure described above was calculated by the average value obtained by measuring optional five positions of the test piece described above. The result is shown in Table 2.

Also, with respect to other compositional elements such as Si, Cu, C, and the like other than Sn and Mg, Si was less than 20 at%, Cu was less than 5 at%, S was less than 5 at%, C was less than 20 at%, N was less than 15 at%, and other elements were less than 7 at% respectively.

(Evaluation of adhesive endurance)

As the form of the test of the adhesive endurance is shown in Fig. 1, the ends of two sheets of the specimen (25 mm width) with the same configuration were overlaid so that the overlap length became 13 mm (adhesion area: 25 mm×13 mm) and were adhered to each other by a thermosetting type epoxy resin-based adhesive. The adhesive used here is the thermosetting type epoxy resin-based adhesive (40-50% in terms of the bisphenol A type epoxy resin amount).

Glass beads (the grain size of 150 μm) of a minute amount were added to the adhesive so as to control the coating thickness of the adhesive layer to 150 μm. The sheets were dried at the room temperature for 30 min after overlaying, and were thereafter subjected to thermosetting treatment by being heated for 20 min at 170°C. Thereafter, the sheets were left at a standstill for 24 hrs at the room temperature, and an adhesive test body was manufactured.

The adhesion test body manufactured was retained for 30 days under a hot and humid environment of 50°C and 95% of the relative humidity and was thereafter pulled at the rate of 50 mm/min by a tensile test machine, and the cohesive failure rate of the adhesive at the adhesion portion was evaluated. The cohesive failure rate was obtained by an expression below. In the expression below, the left side of Fig. 1 after pulling the adhesion test body was made the test piece A, and the right side of Fig. 1 was made the test piece B. Three sets each were manufactured for each test condition, and the average value of 3 sets was made the cohesive failure rate.

$$\text{Cohesive failure rate (\%)}=100\text{-}\{(\text{interface exfoliation area of test piece A/adhesion area of test piece A})\times100\}\text{-}\{(\text{interface exfoliation area of test piece B/adhesion area of test piece B})\times100\}$$

The evaluation criteria were made that less than 60 % of the cohesive failure rate was made inferior "×", 60% or more and less than 80% was made slightly inferior "Δ", 80% or more and less than 90% was made good "○", and 90% or more was made excellent "◎". In these criteria, with respect to the adhesive endurance in joining an automotive panel using an adhesive, ◎ and ○ are over the passing line, whereas Δ and × are the failure.

Basic property of sheet

(Paint-bake hardenability)

As the mechanical property of each specimen sheet after being left at the room temperature (natural aging at room temperature) for 30 days after the surface treatment, the 0.2% proof stress (As proof stress) was obtained by the tensile test. After these respective specimen sheets were commonly subjected to natural aging at the room temperature for 30 days, the 0.2% proof stress (proof stress after BH) of the specimen sheet after being subjected to artificial age hardening treatment (after BH) of 170°C×20 min was obtained by the tensile test. From the difference between these 0.2% proof stresses (the increment of the proof stress), the BH response of each specimen sheet was evaluated.

(Tensile property)

With respect to the tensile test, No. 5 test pieces (25 mm×50 mm GL×sheet thickness) of JIS Z 2201 were taken respectively from the respective specimen sheets, and the tensile test was executed at the room temperature. The pulling direction of the test piece at that time was made the orthogonal direction of the rolling direction. The pulling rate was made 5 mm/min to 0.2% proof stress, and was made 20 mm/min at the proof stress and onward. The N number in measuring the mechanical property was made 5, and the mechanical property was calculated by the average value respectively. With respect to the test piece for measuring the proof stress after the BH, after a pre-strain of 2% simulating the press forming of the sheet was applied to this test piece by this tensile test machine, the BH treatment was executed.

(Hem workability)

With respect to the hem workability, each of the specimen sheets was subjected to 90° bending work with 1.0 mm inward bending radius by a down flange using a rectangular test piece with 30 mm width, was thereafter subjected to pre-hem working of sandwiching an inner with 1.0 mm thickness and folding the folding part inward further to approximately 130° sequentially, and was subjected to flat hem working of folding the folding part to 180° and making the end be tightly attached to the inner.
The surface state such as generation of the rough surface, fine crack, and large crack of the bending part of this flat hem (hem bending part) was visually observed, and was visually evaluated according to the criteria below. In the criteria below, 0-2 are over the passing line, whereas 3-5 are the failure.

0: no cracking and no rough surface, 1: rough surface of light degree, 2: deep rough surface, 3: fine surface crack, 4: linearly continuous surface crack, 5: breakage

First, the Al-Mg-Si-based aluminum alloy sheets containing Sn of A, B, and C shown in Table 1 are manufactured within the preferable composition range described above and with the preferable condition range described above. Therefore, these aluminum alloy sheets are exceptional in the BH response even when they are paint-bake hardened after the natural aging at room temperature after the refining treatment, at a low temperature and within a short time. Even after the natural aging at room temperature after the refining treatment, because the As proof stress is comparatively low, the aluminum alloy sheets are exceptional in the press-formability to an automotive panel and the like, and are exceptional also in the hem workability. Therefore, the aluminum alloy sheets satisfy (are provided with) the required property as a panel structural body of an automobile.

Also, as shown in Table 2, the invention examples 5-15 using the raw material aluminum alloy sheet of said A, B, and C become the oxide coating within the range defined in the present invention. In other words, as the maximum value of each content of Sn and Mg for a region from the surface of the oxide coating to a depth where the oxygen amount becomes 15 at%, the Sn content is within a range of 0.01-10 at%, and the Mg content is less than 10 at% (inclusive of 0 at%). Therefore, the invention examples 5-15 satisfy the adhesion strength required as a panel of an automobile and brought by the adhesive, and are exceptional in the adhesive endurance.

In contrast, as shown in Table 2, with respect to the comparative examples 1, 2, 3, and 4, the maximum value of each content of Sn and Mg for a region from the surface of the oxide coating to a depth where the oxygen amount becomes 15 at% deviates from the defined range because the surface treatment is not executed and because of the improper surface treatment condition. As a result, each of these comparative examples is extremely inferior in the adhesive endurance compared to the invention examples, and cannot be used as a panel of an automobile when an adhesive is used.

Out of them, with respect to the invention example 5 whose Sn content is as less as 0.02 at%, the adhesive endurance is comparatively inferior to other invention examples 7, 8, 9, 11, 14, 15, and the like whose Sn content is higher. Therefore, the adhesive endurance is extremely inferior. Combined with the result of the comparative example 1 whose Sn content is 0 at% extremely inferior in the adhesive endurance, it is presumable that the lower limit value of the Sn content exists in the vicinity of 0.01 at% where the Sn content reduces more. From the result of the invention example 13 in which the adhesive endurance is not comparatively excellent although the Sn content is high and the result of the comparative examples 2 and 3 whose Sn content is higher in which the adhesive endurance is extremely inferior, it is presumable that the upper limit value of the Sn content exists in the vicinity of 10 at% although the Mg content is also related.

Further, with respect to the invention examples 6, 10, 12, and 13 in which Mg is comparatively high even though the Sn content is comparatively high, the adhesive endurance is comparatively inferior compared to the invention examples 7 and 8 whose Mg content is lower even though the Sn content is comparatively lower than the invention examples 6, 10, 12, and 13, and such a fact is endorsed that it is advantageous for the adhesive endurance when the Mg content is lower even when Sn is contained by a predetermined amount. Also, combined with the result that the adhesive endurance is comparatively inferior in the invention examples 6, 10, 12, and 13 in which Mg is comparatively high and the result that the adhesive endurance is extremely inferior in the comparative examples 1-4 in which Mg is higher, it is presumable that the upper limit value of the Mg content exists in the vicinity of 10 at% although the Sn content is also related.

From the result of the examples described above, the significance of the function effect within the composition range of the oxide coating defined in the present invention with respect to the adhesive endurance in the case an adhesive is used for joining with other components is endorsed.

[Table 1]

| Alloy kind | Chemical composition of Al-Mg-Si-based alloy sheet (mass%, remainder is Al) | | | | | | | Property of Al-Mg-Si-based alloy sheet after holding of 30 days at room temperature | | | |
|---|---|---|---|---|---|---|---|---|---|---|---|
| | Mg | Si | Sn | Fe | Mn | Ti | Cu | As 0.2% proof stress MPa | 0.2% proof stress after BH MPa | Increment of proof stress MPa | Hem workability |
| A | 0.40 | 0.82 | 0.02 | 0.20 | 0.05 | 0.01 | 0.12 | 88 | 206 | 118 | 1 |
| B | 0.55 | 1.02 | 0.05 | 0.17 | 0.06 | 0.01 | 0.16 | 104 | 231 | 127 | 1 |
| C | 0.70 | 0.95 | 0.23 | 0.18 | 0.07 | 0.02 | 0.10 | 89 | 219 | 130 | 1 |

[Table 2]

| Classification | No. | Alloy kind of Table 1 | Surface treatment condition of Al-Mg-Si-based alloy sheet | Oxide coating property of Al-Mg-Si-based alloy sheet | | |
|---|---|---|---|---|---|---|
| | | | | Maximum Sn content at% | Maximum Mg content at% | Adhesive endurance |
| Comparative example | 1 | A | Alkali degreasing →pickling →surface treatment | 0.00 | 8.3 | x |
| Comparative example | 2 | A | Without treatment | 12.3 | 23.0 | x |
| Comparative example | 3 | A | Alkali degreasing only | 10.5 | 9.5 | x |
| Comparative example | 4 | A | Pickling →surface treatment | 1.8 | 14.0 | Δ |
| Invention example | 5 | A | Alkali degreasing →pickling →surface treatment | 0.02 | 6.0 | o |
| Invention example | 6 | A | | 1.3 | 8.2 | o |
| Invention example | 7 | A | | 0.10 | 4.2 | ◎ |
| Invention example | 8 | A | | 0.50 | 3.1 | ◎ |
| Invention example | 9 | A | | 2.3 | 2.8 | ◎ |
| Invention example | 10 | A | | 6.8 | 7.2 | o |
| Invention example | 11 | A | | 3.2 | 1.2 | ◎ |
| Invention example | 12 | A | | 6.1 | 4.3 | o |
| Invention example | 13 | A | | 8.3 | 7.2 | o |
| Invention example | 14 | B | | 3.4 | 5.6 | ◎ |
| Invention example | 15 | C | | 4.8 | 3.5 | ◎ |

Although the present invention was described in detail referring to the predetermined aspects, it is obvious for a person with an ordinary skill in the art that various alterations and amendments are possible without departing from the spirit and scope of the present invention.

The present application is based on Japanese Patent Application (JP-A No. 2014-074048) applied on March 31, 2014, and its entirety is incorporated by reference into the present application.

[Industrial Applicability]

According to the present invention, a 6000-series aluminum alloy material can be provided which can be applied to an automotive component such as an automotive panel that uses an adhesive for joining with a component without spoiling the BH response and formability after the natural aging at room temperature. As a result, application of a 6000-series aluminum alloy sheet can be widened to a panel of an automobile particularly an outer panel and the like in which the designability such as the beautiful curved surface configuration and character line become an issue and an adhesive is inevitably used.

**Claims**

1.  Al-Mg-Si-based aluminum alloy material exceptional in adhesive endurance comprising Sn, wherein, when an oxide coating formed on the surface of the aluminum alloy material is subjected to glow discharge emission spectroscopic analysis, as the maximum value of each content of Sn and Mg for a region from the surface of the oxide coating to a depth where oxygen amount becomes 15 at%, Sn content is within a range of 0.01-10 at%, and Mg content is 0 at% or more and less than 10 at%.

2.  The Al-Mg-Si-based aluminum alloy material exceptional in adhesive endurance according to claim 1, wherein an adhesive layer is provided on the surface of the oxide coating that is formed on the surface of the aluminum alloy material.

3.  A joined body, wherein the aluminum alloy materials according to claim 1 are joined with each other through an adhesive layer so that the oxide coatings of the aluminum alloy materials oppose with each other.

4.  An automotive component, comprising the aluminum alloy material according to claim 2 or the joined body according to claim 3.

# FIG.1

PULLING DIRECTION

ADHESIVE
150 $\mu$m THICKNESS

100mm

13mm

100mm

25mm

100mm

**INTERNATIONAL SEARCH REPORT**

International application No.

PCT/JP2015/058629

| A. CLASSIFICATION OF SUBJECT MATTER |
|---|
| C22C21/02(2006.01)i, B32B15/20(2006.01)i, C22C21/06(2006.01)i, C22F1/05 (2006.01)i, C22F1/00(2006.01)n |

According to International Patent Classification (IPC) or to both national classification and IPC

| B. FIELDS SEARCHED |
|---|
| Minimum documentation searched (classification system followed by classification symbols) |
| C22C21/02, B32B15/20, C22C21/06, C22F1/05, C22F1/00 |

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 51-054817 A  (Kobe Steel, Ltd.), 14 May 1976 (14.05.1976), examples (Family: none) | 1-4 |
| A | JP 2006-009140 A  (Nippon Steel Corp.), 12 January 2006 (12.01.2006), claims; paragraphs [0002] to [0012], [0033], [0045] (Family: none) | 1-4 |
| A | JP 59-096243 A  (Mitsubishi Aluminum Co., Ltd.), 02 June 1984 (02.06.1984), page 1, right column, line 16 to page 2, lower right column, line 10 (Family: none) | 1 |

| ☒ Further documents are listed in the continuation of Box C. | ☐ See patent family annex. |

\*     Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search     05 June 2015 (05.06.15) | Date of mailing of the international search report     16 June 2015 (16.06.15) |
|---|---|
| Name and mailing address of the ISA/     Japan Patent Office     3-4-3,Kasumigaseki,Chiyoda-ku,     Tokyo 100-8915,Japan | Authorized officer     Telephone No. |

Form PCT/ISA/210 (second sheet) (July 2009)

**INTERNATIONAL SEARCH REPORT**

International application No.

PCT/JP2015/058629

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-130768 A (The Furukawa Electric Co., Ltd.), 19 May 1998 (19.05.1998), paragraphs [0001] to [0006], [0011], [0020] (Family: none) | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09249950 B
- JP H10226894 B

- JP 2014074048 A